# EUROPÄISCHE PATENTANMELDUNG

(11) **EP 4 361 552 A1**
(43) Veröffentlichungstag der Anmeldung: **01.05.2024**
(21) Anmeldenummer: 23204187.1
(22) Anmeldetag: 17.10.2023
(51) Int. Cl.: G01B 5/00, G01B 13/10, G01B 13/14

(54) **HALTEVORRICHTUNG UND PRÜFSYSTEM**

(30) Priorität: 25.10.2022 DE 102022211307
(71) Anmelder: Nagel Maschinen- und Werkzeugfabrik GmbH, 72622 Nürtingen (DE)
(72) Erfinder: Hodza, Erkan, 72622 Nürtingen (DE); Bauer, Michael Alexander, 72581 Dettingen/Erms (DE); Fohr, Nikolas, 72820 Sonnenbühl (DE); Keuerleber, Jan, 72644 Oberboihingen (DE)
(74) Vertreter: Patentanwälte Ruff, Wilhelm, Beier, Dauster & Partner mbB

(57) **Zusammenfassung**

Die Erfindung betrifft eine Haltevorrichtung (1) zum Halten eines Prüfdorns (50) zum Prüfen von Bohrungen, wobei die Haltevorrichtung (1) aufweist: ein Gehäuse (2), welches einen Gehäuseinnenraum (3) begrenzt, und eine Aufnahmeeinrichtung (4) mit einem entlang einer Mittelachse (M) der Aufnahmeeinrichtung (4) verlaufenden und in einer axialen Richtung (A) der Haltevorrichtung (1) nach außen geöffneten Aufnahmeraum (5), in welchem ein Aufnahmeabschnitt (51) des Prüfdorns (50) entgegen der axialen Richtung (A) aufnehmbar ist, wobei die Aufnahmeeinrichtung (4) teilweise in dem Gehäuseinnenraum (3) aufgenommen und derart an dem Gehäuse (2) gelagert ist, dass die Aufnahmeeinrichtung (4) relativ zum Gehäuse (2) nachgiebig entlang der axialen Richtung (A) und schwimmend entlang einer senkrecht zur axialen Richtung (A) von der Mittelachse (M) weg verlaufenden radialen Richtung (R) translatorisch begrenzt beweglich ist, wobei die Aufnahmeeinrichtung (4) relativ zum Gehäuse (2) um eine quer zur axialen Richtung (A) verlaufende Schwenkachse derart begrenzt schwenkbeweglich ist, dass die Mittelachse (M) der Aufnahmeeinrichtung (4) gegenüber dem Gehäuse (2) anstellbar ist.

## Beschreibung

### ANWENDUNGSGEBIET UND STAND DER TECHNIK

Die Erfindung betrifft eine Haltevorrichtung zum Halten eines Prüfdorns zum Prüfen von Bohrungen. Die Erfindung betrifft zudem ein Prüfsystem zum Prüfen von Bohrungen, wobei das Prüfsystem eine derartige Haltevorrichtung umfasst.

Zum Prüfen einer an einem Prüfling vorhandenen Bohrung werden seit geraumer Zeit Prüfdorne eingesetzt, die in die zu prüfende Bohrung eingeführt werden können, um eine Aussage über eine Maßhaltigkeit der zu prüfenden Bohrung zu treffen. Derartige Prüfdorne werden dabei typischerweise mittels einer Haltevorrichtung gehalten und der Prüfling relativ zum Prüfdorn und zur Haltevorrichtung verstellt, so dass der Prüfdorn in die zu prüfende Bohrung eintaucht. Häufig ist dabei der Prüfdorn an seinem freien Ende, mit welchem er in die zu prüfende Bohrung eintauchen kann, mit einer Einführfase versehen. Diese Einführfase kann in gewissem Umfang helfen, trotz eines Versatzes zwischen Bohrung und Prüfdorn den Prüfdorn in die Bohrung einzuführen. Eine Kompensation eines solchen Versatzes ist mittels der Einführfase allein allerdings nur in sehr eingeschränktem Umfang möglich.

### AUFGABE UND LÖSUNG

Es ist eine Aufgabe der Erfindung, eine Haltevorrichtung zum Halten eines Prüfdorns zum Prüfen von Bohrungen sowie ein Prüfsystem mit einer derartigen Haltevorrichtung bereitzustellen, die das Einführen des Prüfdorns in eine zu prüfende Bohrung vereinfachen. Insbesondere sollen negative Folgen einer Kollision des Prüfdorns mit einem die zu prüfende Bohrung aufweisenden Prüfling abgemildert oder sogar vollständig vermieden werden. Vorzugsweise soll ein störungsfreies Einführen des Prüfdorns in die zu prüfende Bohrung ermöglicht werden, das selbst bei nicht perfekt fluchtender Ausrichtung des Prüfdorns relativ zur Bohrung ohne Verkanten oder andere Störungen funktioniert.

Diese Aufgabe wird durch die Gegenstände der unabhängigen Patentansprüche gelöst. Bevorzugte Ausführungsformen sind Gegenstand der abhängigen Patentansprüche.

Der Wortlaut sämtlicher Ansprüche wird durch Bezugnahme zum Inhalt der vorliegenden Beschreibung gemacht.

Eine erfindungsgemäße Haltevorrichtung dient zum Halten eines Prüfdorns zum Prüfen von Bohrungen. Die Haltevorrichtung weist ein Gehäuse auf, welches einen Gehäuseinnenraum begrenzt. Die Haltevorrichtung weist außerdem eine Aufnahmeeinrichtung mit einer Mittelachse auf, entlang welcher ein Aufnahmeraum der Aufnahmeeinrichtung verläuft. Der Aufnahmeraum ist entlang einer axialen Richtung der Haltevorrichtung nach außen geöffnet. In dem Aufnahmeraum ist ein Aufnahmeabschnitt des Prüfdorns entgegen der axialen Richtung aufnehmbar. Die axiale Richtung kann entgegen der Schwerkraftrichtung verlaufen. Der Aufnahmeraum kann als Sackloch realisiert sein, dessen Tiefe der axialen Positionierung des Prüfdorns dient. Der Aufnahmeraum kann komplementär zum Aufnahmeabschnitt des Prüfdorns ausgebildet sein, insbesondere in der Art einer Übergangspassung oder einer engen Spielpassung. Die Aufnahmeeinrichtung ist teilweise in dem Gehäuseinnenraum aufgenommen. Dabei ist die Aufnahmeeinrichtung derart an dem Gehäuse gelagert, dass die Aufnahmeeinrichtung relativ zum Gehäuse nachgiebig entlang der axialen Richtung translatorisch begrenzt beweglich ist. Zudem ist die Aufnahmeeinrichtung so an dem Gehäuse gelagert, dass die Aufnahmeeinrichtung relativ zum Gehäuse schwimmend entlang einer senkrecht zur axialen Richtung von der Mittelachse weg verlaufenden radialen Richtung translatorisch begrenzt beweglich ist. Darüber hinaus ist die Aufnahmeeinrichtung relativ zum Gehäuse begrenzt schwenkbeweglich. Eine Schwenkachse, um welche die Aufnahmeeinrichtung relativ zum Gehäuse schwenkbeweglich ist, verläuft quer zur axialen Richtung. Dabei ist die Aufnahmeeinrichtung relativ zum Gehäuse derart schwenkbeweglich, dass die Mittelachse der Aufnahmeeinrichtung gegenüber dem Gehäuse anstellbar ist. Vorzugsweise ist die Aufnahmeeinrichtung zusätzlich um wenigstens eine weitere Schwenkachse relativ zum Gehäuse schwenkbar, die winkelig, insbesondere rechtwinkelig, zur anderen Schwenkachse und quer zur axialen Richtung verläuft. Zweckmäßig ist die Aufnahmeeinrichtung dabei in der Art eines Kardangelenks bezogen auf die Mittelachse im Wesentlichen drehstarr mit dem Gehäuse verbunden.

Unter "Prüfen" ist dabei eine Untersuchung der Bohrung zu verstehen, die darauf abzielt, eine Aussage über die Maßhaltigkeit der Bohrung zu treffen. Insofern kann durch Prüfen der Bohrung entweder eine rein qualitative Aussage oder eine quantitative Aussage über die Maßhaltigkeit der Bohrung getroffen werden. Die Bohrung ist maßhaltig, wenn sie innerhalb einer vorbestimmten Toleranz einem vorbestimmten Sollmaß entspricht. Qualitativ kann durch das Prüfen der Bohrung in der Art einer Lehre eine qualitative Aussage getroffen werden, ob die Bohrung innerhalb der vorbestimmten Toleranz des Sollmaßes ausgebildet ist. Alternativ kann durch das Prüfen im Sinne eines Messvorgangs eine quantitative Aussage dahingehend getroffen werden, welche tatsächlichen Abmessungen die Bohrung hat bzw. um wieviel die Bohrung von dem vorbestimmten Sollmaß abweicht. Der Begriff "Prüfen" ist im vorliegenden Zusammenhang also als Oberbegriff für "Lehren" und "Messen" zu verstehen.

Die Aufnahmeeinrichtung ist entlang der axialen Richtung und quer dazu translatorisch innerhalb vorbestimmter Grenzen auslenkbar. Auf diese Weise lässt sich - wenn ein Prüfdorn an der Aufnahmeeinrichtung montiert ist - ein radialer Versatz und/oder ein Winkelversatz zwischen dem Prüfdorn und der zu prüfenden Bohrung wenigstens in einem gewissen Umfang ausgleichen. Ein derartiger Versatz kann ohne Ausgleich zu einer Beschädigung des Prüfdorns, der Haltevorrichtung und/oder des Prüflings führen. Außerdem kann es infolge eines derartigen Versatzes ohne den Ausgleich zu einem Verkanten des Prüfdorns in der zu prüfenden Bohrung kommen. Durch die Beweglichkeit der Aufnahmeeinrichtung relativ zum Gehäuse in mindestens drei Freiheitsgraden kann die Haltevorrichtung im Falle einer Kollision des Prüfdorns oder der Aufnahmeeinrichtung mit dem Prüfling nachgeben, so dass sich eventuelle nachteilige Kollisionsfolgen abmindern oder wünschenswerterweise sogar vollständig abwenden lassen können. Die erfindungsgemäße Haltevorrichtung erweist sich daher als besonders zuverlässig bei der Prüfung von Bohrungen und zudem als besonders kollisionsbeständig. Durch die Nachgiebigkeit der Haltevorrichtung bzw. durch ihre Anpassungsfähigkeit kann auch Verschleiß gemindert und dadurch die Standzeit des Systems verlängert werden.

In Ausgestaltung der Erfindung weist das Gehäuse der Haltevorrichtung einen Gehäusetopf und einen Gehäusedeckel auf. Der Gehäusetopf und der Gehäusedeckel können jeweils unterbrechungsfrei oder mit Unterbrechungen ausgebildet sein. Das Gehäuse mit Gehäusetopf und Gehäusedeckel kann dazu dienen, den Gehäuseinnenraum gegenüber Umgebungseinflüssen abzuschirmen. Der Gehäusetopf weist einen Topfboden und eine vom Topfboden entlang der axialen Richtung abstehende Topfwand auf. Der Topfboden und die Topfwand können unterbrechungsfrei bzw. durchgängig oder mit Unterbrechungen ausgebildet sein. Vorzugsweise sind der Topfboden und die Topfwand im Wesentlichen durchgängig ausgebildet, so dass ein weitgehend geschlossenes Gehäuse realisierbar ist. Die Topfwand säumt eine Topföffnung des Gehäusetopfs, die dem Topfboden entlang der axialen Richtung gegenüberliegend angeordnet ist. Im montierten Zustand ist die Topföffnung zur Begrenzung des Gehäuseinnenraums mittels des Gehäusedeckels abgedeckt.

Zwischen dem Gehäuse und der Aufnahmeeinrichtung ist ein radiales Spiel vorhanden. Dieses radiale Spiel kann die schwimmende Beweglichkeit der Aufnahmeeinrichtung entlang der radialen Richtung definieren bzw. begrenzen. Das Gehäuse weist vorzugsweise im Bereich des Topfbodens eine Durchgangsöffnung auf. Mittels der Durchgangsöffnung ist der Gehäuseinnenraum entlang der axialen Richtung nach außen geöffnet. Dabei ist ein Abschnitt der Aufnahmeeinrichtung in der Durchgangsöffnung mit radialem Spiel aufgenommen. Mittels des radialen Spiels zwischen der Aufnahmeeinrichtung und der Durchgangsöffnung im Bereich des Topfbodens kann vorteilhaft die schwimmende Beweglichkeit der Aufnahmeeinrichtung relativ zum Gehäuse entlang der radialen Richtung definiert sein. In dem Gehäuseinnenraum kann ein Schmiernebel zum Schmieren der Aufnahmeeinrichtung und der im Gehäuseinnenraum angeordneten Komponenten vorhanden sein, der mittels des Gehäuses im Wesentlichen von einer äußeren Umgebung der Haltevorrichtung abgetrennt sein kann. "im Wesentlichen" bezieht sich dabei darauf, dass der Gehäuseinnenraum mittels des Gehäuses nicht zwingend hermetisch abgedichtet sein muss, sondern beispielsweise im Bereich der Durchgangsöffnung der Gehäuseinnenraum mit der äußeren Umgebung fluidleitend kommunizierend verbunden sein kann. Unter Umständen kann aber an der Durchgangsöffnung eine Dichtungseinrichtung vorgesehen sein, die mit dem in der Durchgangsöffnung aufgenommenen Abschnitt der Aufnahmeeinrichtung wechselwirkt, um einen Fluidübertritt zwischen Gehäuseinnenraum und äußerer Umgebung wenigstens zu erschweren. Eine solche Dichtungseinrichtung kann ein zum Spielausgleich elastisch verformbares Dichtungselement und/oder eine Labyrinth-Struktur aufweisen.

In weiterer Ausgestaltung der Erfindung weist die Haltevorrichtung eine erste Axial-Lagereinrichtung auf, die der Lagerung der Aufnahmeeinrichtung am Gehäuse dient. Die erste Axial-Lagereinrichtung ist im Gehäuseinnenraum angeordnet und säumt dort die Durchgangsöffnung des Gehäuses, die im Bereich des Topfbodens angeordnet sein kann. Die Durchgangsöffnung ist also von der ersten Axial-Lagereinrichtung eingefasst. Die Aufnahmeeinrichtung weist einen radial erstreckten Vorsprung auf, der axial beabstandet zu einem ersten axialen Ende der Aufnahmeeinrichtung angeordnet ist. Dabei ist der radial erstreckte Vorsprung innerhalb des Gehäuseinnenraums angeordnet. Die erste Axial-Lagereinrichtung ist in axialer Richtung zwischen dem Gehäuse und dem radial erstreckten Vorsprung angeordnet. Insbesondere ist die erste Axial-Lagereinrichtung in axialer Richtung zwischen dem Gehäuseboden und dem radial erstreckten Vorsprung angeordnet. Vorzugsweise ist ein Außendurchmesser des radial erstreckten Vorsprungs größer als ein Innendurchmesser der Durchgangsöffnung und kleiner als ein Innendurchmesser des Gehäuseinnenraums. Hierdurch ist die Beweglichkeit der Aufnahmeeinrichtung relativ zum Gehäuse in axialer Richtung begrenzt und zugleich die Beweglichkeit der Aufnahmeeinrichtung relativ zum Gehäuse in radialer Richtung gewährleistet.

In weiterer Ausgestaltung der Erfindung weist die Haltevorrichtung eine radial erstreckte Lagerscheibe auf, die in dem Gehäuseinnenraum aufgenommen ist. Eine Dickenrichtung der Lagerscheibe ist vorzugsweise entlang der axialen Richtung erstreckt. Der radial erstreckte Vorsprung der Aufnahmeeinrichtung, der innerhalb des Gehäuseinnenraums angeordnet ist, ist entlang der axialen Richtung zwischen dem Gehäuse, insbesondere dem Topfboden, und der Lagerscheibe angeordnet. Vorzugsweise trägt die Lagerscheibe dem radial erstreckten Vorsprung zugewandt eine zweite Axial-Lagereinrichtung zur Lagerung der Aufnahmeeinrichtung. Die Lagerscheibe ermöglicht vorteilhaft eine besonders zuverlässige Führung der Aufnahmeeinrichtung im Gehäuseinnenraum, insbesondere entlang der axialen und/oder entlang der radialen Richtung.

In weiterer Ausgestaltung der Erfindung weist die erste und/oder zweite Axial-Lagereinrichtung wenigstens ein Gleitelement auf. Alternativ oder zusätzlich weist die erste und/oder zweite Axial-Lagereinrichtung wenigstens eine ringförmige Kugellagereinheit auf. Eine erste und/oder zweite Axial-Lagereinrichtung mit Kugellagereinheit ermöglicht vorteilhaft eine besonders leichtgängige Lagerung der Aufnahmeeinrichtung am Gehäuse. Eine erste und/oder zweite Axial-Lagereinrichtung mit Kugellagereinheit erweist sich vorteilhaft als besonders kompakt und robust.

In weiterer Ausgestaltung der Erfindung weist die Lagerscheibe einen, insbesondere zentralen, Durchgang auf. Dabei umfasst die Aufnahmeeinrichtung einen Abschnitt, der entlang der axialen Richtung mit radialem Spiel durch den Durchgang ragt. Mittels dieses radialen Spiels lässt sich vorteilhaft die radiale Beweglichkeit der Aufnahmeeinrichtung relativ zum Gehäuse definieren.

In weiterer Ausgestaltung der Erfindung weist die Haltevorrichtung wenigstens zwei am Gehäuse entlang der axialen Richtung, insbesondere in gehäusefesten Führungsbuchsen, beweglich gelagerte Führungsbolzen auf. Die Führungsbolzen sind parallel zur axialen Richtung erstreckt. Dabei weist die Lagerscheibe je Führungsbolzen einen entlang der axialen Richtung erstreckten Durchbruch auf. In jedem der Durchbrüche der Lagerscheibe greift jeweils ein Abschnitt eines der Führungsbolzen mit Spiel ein. Vorzugsweise ist je Führungsbolzen an dem radial erstreckten Vorsprung der Aufnahmeeinrichtung eine entlang der axialen Richtung erstreckte Ausnehmung der Aufnahmeeinrichtung vorhanden. Dabei sind axiale Endbereiche der Führungsbolzen, insbesondere mit radialem Spiel, wenigstens teilweise in den Ausnehmungen der Aufnahmeeinrichtung aufgenommen. Auf diese Weise lässt sich eine im Wesentlichen drehstarre Lagerung der Aufnahmeeinrichtung um die Mittelachse relativ zum Gehäuse erreichen.

In weiterer Ausgestaltung der Erfindung weist die Haltevorrichtung eine Rückstelleinrichtung auf. Die Aufnahmeeinrichtung ist mittels der Rückstelleinrichtung relativ zum Gehäuse in eine Neutralstellung selbstrückstellend vorgespannt. In der Neutralstellung verläuft die Mittelachse der Aufnahmeeinrichtung auf einer Zentralachse des Gehäuses und entlang der axialen Richtung. Infolge der axialen und radialen Beweglichkeit sowie infolge der Schwenkbeweglichkeit der Aufnahmeeinrichtung relativ zum Gehäuse kann die Aufnahmeeinrichtung aus ihrer Neutralstellung heraus ausgelenkt werden. Zudem kann die Aufnahmeeinrichtung von ihrer Neutralstellung ausgehend entgegen der axialen Richtung relativ zum Gehäuse verstellt werden. Die Rückstelleinrichtung sorgt dabei vorteilhaft dafür, dass nach Abschluss eines Prüfvorgangs die Aufnahmeeinrichtung relativ zum Gehäuse selbsttätig wieder ihre Neutralstellung einnimmt und somit für einen anschließenden Prüfvorgang wieder dieselben Bedingungen vorherrschen wie vor dem vorhergehenden Prüfvorgang. Ein Aufsummieren von Ausrichtungsabweichungen zwischen zu prüfender Bohrung und Prüfdorn im Zuge aufeinanderfolgender Prüfvorgänge lässt sich somit vorteilhaft vermeiden.

In weiterer Ausgestaltung der Erfindung weist die Rückstelleinrichtung wenigstens eine erste und wenigstens eine zweite Federeinrichtung auf. Dabei ist die erste Federeinrichtung unter Erzeugung einer entlang der axialen Richtung wirkenden ersten Vorspannkraft entlang der axialen Richtung elastisch verformbar. Die erste Vorspannkraft wirkt vorzugsweise in der axialen Richtung. Somit lässt sich sicherstellen, dass vor Beginn eines Prüfvorgangs stets ein ausreichender Verstellweg der Aufnahmeeinrichtung relativ zum Gehäuse entgegen der axialen Richtung vorhanden ist. Die zweite Federeinrichtung ist unter Erzeugung einer entlang der radialen Richtung wirkenden zweiten Vorspannkraft entlang der radialen Richtung elastisch verformbar. Insbesondere wirkt die zweite Vorspannkraft entgegen der radialen Richtung. Die zweite Federeinrichtung sorgt also vorteilhaft dafür, dass die Aufnahmeeinrichtung vor Beginn eines Prüfvorgangs zentriert ist bzw. relativ zum Gehäuse koaxial zu dessen Zentralachse angeordnet ist, so dass stets ausreichend Verstellweg entlang der radialen Richtung vorhanden ist.

In weiterer Ausgestaltung der Erfindung weist die Aufnahmeeinrichtung einen ersten Endabschnitt mit einem ersten axialen Ende der Aufnahmeeinrichtung auf. Zudem weist die Aufnahmeeinrichtung einen zweiten Endabschnitt mit einem zweiten axialen Ende der Aufnahmeeinrichtung auf. Der erste und der zweite Endabschnitt können einander entlang der axialen Richtung gegenüberliegen. An dem ersten Endabschnitt ist der Aufnahmeraum angeordnet. Dieser kann sich an dem ersten axialen Ende befinden bzw. am ersten axialen Ende offen sein. Der zweite Endabschnitt ist an dem Gehäuse gelagert, insbesondere innerhalb des Gehäuseinnenraums. Somit sind die Funktionen der auslenkbaren Lagerung der Aufnahmeeinrichtung und der Aufnahme des Prüfdorns örtlich voneinander separiert. Der zweite Endabschnitt kann dem ersten Ende gegenüberliegend aus dem Gehäuseinnenraum herausragen, so dass das zweite Ende außerhalb des Gehäuseinnenraums angeordnet ist.

In weiterer Ausgestaltung der Erfindung weist die Aufnahmeeinrichtung eine erste Komponente auf, die das erste axiale Ende umfasst. Die Aufnahmeeinrichtung weist ferner eine zweite Komponente auf, die das zweite axiale Ende umfasst. Die beiden Komponenten weisen jeweils komplementäre Kupplungsabschnitte einer, insbesondere als Bajonett-Kupplung oder Schraub-Kupplung ausgebildeten, Kupplungseinrichtung der Aufnahmeeinrichtung auf. Mittels der Kupplungseinrichtung sind die erste und die zweite Komponente im betriebsfertig montierten Zustand lösbar aneinander befestigt. Alternativ zu der vorstehend genannten zweiteiligen Ausbildung der Aufnahmeeinrichtung kann die Aufnahmeeinrichtung einen einteiligen Grundkörper aufweisen, an welchem das erste und das zweite axiale Ende vorhanden sind. Die zweiteilige Ausbildung der Aufnahmeeinrichtung erweist sich als besonders flexibel in der Handhabung bei der Prüfung von Bohrungen verschiedener Spezifikationen. Demgegenüber erweist sich die einteilig ausgebildete Aufnahmeeinrichtung als besonders robust.

"Einteiliger Grundkörper" kann im vorliegenden Zusammenhang bedeuten, dass wenigstens zwei Funktionseinheiten des Grundkörpers fest miteinander verbunden sind. Die Funktionseinheiten können beispielsweise materialeinheitlich miteinander verbunden sein. Alternativ können die Funktionseinheiten lösbar miteinander verbunden, beispielsweise verschraubt, sein. "Einteilig" bezieht sich insofern wenigstens darauf, dass eine Trennung der Funktionseinheiten bei der Verwendung der Aufnahmeeinrichtung zur Prüfung von Bohrungen nicht vorgesehen ist. Der "einteilige" Grundkörper kann entsprechend ein einziges "funktionell einheitliches Funktionsteil" ausbilden. In weiterer Ausgestaltung der Erfindung weist die Aufnahmeeinrichtung einen entlang der axialen Richtung von Druckluft durchströmbaren Luftkanal auf. Der Luftkanal der Aufnahmeeinrichtung mündet in den Aufnahmeraum der Aufnahmeeinrichtung. Dabei endet der Luftkanal dem Aufnahmeraum, insbesondere entlang der axialen Richtung, gegenüberliegend in einem Druckluftanschluss der Haltevorrichtung. An dem Druckluftanschluss ist eine, insbesondere externe, Druckluftversorgung bzw. Druckluftquelle anschließbar. Vorzugsweise ist der Druckluftanschluss an dem zweiten axialen Ende der Aufnahmeeinrichtung und außerhalb des Gehäuseinnenraums angeordnet. Mittels des Druckluftkanals lässt sich vorteilhaft ein Prüfdorn mit Druckluft versorgen, der für eine pneumatische Durchmesser- und/oder Tiefenmessung der zu prüfenden Bohrung eingerichtet ist.

In weiterer Ausgestaltung der Erfindung weist die erste Komponente an ihrem Kupplungsabschnitt einen Zapfen auf. Der Zapfen ist entlang der axialen Richtung erstreckt. Die erste Komponente weist zudem eine Verriegelungshülse auf, die den Zapfen umgibt. Die Verriegelungshülse kann Handhabungsbereiche aufweisen, an welchen die Verriegelungshülse manuell und/oder mittels eines Roboters greifbar ist. Dabei weisen die Verriegelungshülse und der Kupplungsabschnitt der zweiten Komponente Bajonett-Konturen auf, die in komplementärer Weise aufeinander abgestimmt sind. Die Verriegelungshülse ist relativ zum Zapfen, insbesondere manuell und/oder mittels eines Roboters, drehbar und axial an dem Zapfen gehalten. Die Bajonett-Konturen der Verriegelungshülse und des Kupplungsabschnitts der zweiten Komponente können durch Drehen der Verriegelungshülse miteinander in Eingriff gebracht werden, und zwar bei gleichbleibender Ausrichtung des Zapfens relativ zur zweiten Komponente. Durch Ineingriffbringen der beiden Bajonett-Konturen kann der Zapfen bzw. die erste Komponente mittels der Bajonett-Konturen entlang der axialen Richtung an der zweiten Komponente gehalten werden. Vorzugsweise verläuft je ein Abschnitt des Luftkanals der Aufnahmeeinrichtung durch den Zapfen und durch die zweite Komponente hindurch, wobei die beiden Abschnitte des Luftkanals mittels der Kupplungseinrichtung ohne unerwünschte Lecks miteinander fluidleitend verbindbar sind. Es ergibt sich eine besonders einfach, insbesondere manuell und/oder automatisch mittels eines Roboters, lös- und schließbare Kupplungsvorrichtung zur lösbaren Verbindung der ersten und der zweiten Komponente.

In weiterer Ausgestaltung der Erfindung weist die Aufnahmeeinrichtung ein Spannfutter, insbesondere ein Hydrodehnspannfutter, auf. An dem Spannfutter ist der Aufnahmeraum vorhanden. Der Aufnahmeraum kann mittels des Spannfutters verengt oder aufgeweitet werden. Insbesondere ist mittels des Spannfutters ein im Aufnahmeraum aufgenommener Prüfdorn fluiddicht, insbesondere druckluftdicht, einspannbar.

Das Ausmaß der Beweglichkeit in den Freiheitsgraden sollte für die meisten praktisch auftretenden Anwendungsfälle ausreichend, aber nicht zu groß sein. Vorzugsweise ist die Aufnahmevorrichtung relativ zum Gehäuse entlang der axialen Richtung innerhalb eines axialen Spiels von 1 mm bis 20 mm, insbesondere von 1 mm bis 5 mm, nachgiebig begrenzt beweglich. Alternativ oder zusätzlich kann die Aufnahmeeinrichtung relativ zum Gehäuse entlang der radialen Richtung innerhalb eines radialen Spiels von 0,05 mm bis 1 mm, insbesondere von 0,05 mm bis 0,3 mm, schwimmend begrenzt beweglich sein. Alternativ oder zusätzlich kann die Aufnahmeeinrichtung relativ zum Gehäuse um die Schwenkachse derart schwenkbeweglich sein, dass die Mittelachse der Aufnahmeeinrichtung gegenüber der axialen Richtung unter einem Winkel von 0,5° bis 5°, insbesondere von 0,5° bis 3°, anstellbar ist.

In weiterer Ausgestaltung der Erfindung weist die Haltevorrichtung eine, insbesondere induktive, Sensoreinrichtung zur Detektion einer Position der Aufnahmeeinrichtung relativ zum Gehäuse auf. Mittels der Sensoreinrichtung lässt sich vorteilhaft erkennen, wenn die Aufnahmeeinrichtung relativ zum Gehäuse über ein vorbestimmtes Ausmaß hinaus verstellt wird. Dieses vorbestimmte Ausmaß ist vorzugsweise kleiner als das tatsächlich vorhandene Spiel, insbesondere entlang der axialen Richtung, so dass rechtzeitig vor vollständiger Ausnutzung des Spiels das Verstellen der Aufnahmeeinrichtung gestoppt werden kann. Ein solches Verstellen der Aufnahmeeinrichtung relativ zum Gehäuse kann beispielsweise bei, insbesondere axialer, Kollision der Aufnahmeeinrichtung oder eines an der Aufnahmeeinrichtung montierten Prüfdorns mit einem Prüfling entstehen. Mittels der Sensoreinrichtung kann eine Notabschaltung eines den Prüfling handhabenden Roboters realisiert sein. An der Aufnahmeeinrichtung kann ein Detektionselement befestigt sein, auf welches die Sensorreinrichtung reagiert. Das Detektionselement kann aus einem ferromagnetischen Material hergestellt sein.

Wie eingangs bereits erwähnt, betrifft die Erfindung zudem ein Prüfsystem zum Prüfen von Bohrungen, wobei das Prüfsystem eine erfindungsgemäße Haltevorrichtung wie voranstehend beschrieben aufweist. Das Prüfsystem weist zudem einen Prüfdorn mit einem Aufnahmeabschnitt auf. Dabei ist der Aufnahmeabschnitt des Prüfdorns in dem Aufnahmeraum der Aufnahmeeinrichtung der Haltevorrichtung aufgenommen. Die vorstehend genannten Vorteile der erfindungsgemäßen Haltevorrichtung übertragen sich auch auf das erfindungsgemäße Prüfsystem mit einer derartigen Haltevorrichtung.

In Ausgestaltung des Prüfsystems weist der Prüfdorn einen von Druckluft durchströmbaren Luftkanal auf. Der Luftkanal des Prüfdorns ist im Aufnahmeabschnitt entlang der axialen Richtung erstreckt. Dabei weist der Prüfdorn einen dem Aufnahmeabschnitt in axialer Richtung gegenüberliegenden Prüfabschnitt auf, wobei der Prüfabschnitt zum axialen Einführen in eine zu prüfende Bohrung eingerichtet ist. Der Luftkanal des Prüfdorns ist im Prüfabschnitt in wenigstens einer Düsenöffnung des Prüfdorns radial nach außen geöffnet. Beispielsweise ist der Luftkanal im Prüfabschnitt in wenigstens zwei einander diametral gegenüberliegenden Düsenöffnungen des Prüfdorns radial nach außen geöffnet. Ein solcher Prüfdorn ermöglicht vorteilhaft eine pneumatische Untersuchung, insbesondere Vermessung, der zu prüfenden Bohrung.

In weiterer Ausgestaltung des Prüfsystems weist das Prüfsystem mehrere Prüfdorne, insbesondere verschiedener Spezifikation ihrer Prüfabschnitte, auf, die mittels eines Roboters des Prüfsystems handhabbar und an der Aufnahmeeinrichtung austauschbar montierbar sind. Auf diese Weise können mittels des Prüfsystems Bohrungen verschiedenster Spezifikationen mit entsprechend darauf abgestimmten Prüfdornen geprüft bzw. ausgemessen werden.

In weiterer Ausgestaltung des Prüfsystems ist die Aufnahmeeinrichtung der Haltevorrichtung mit einer ersten Komponente und mit einer zweiten Komponente ausgeführt, die mittels einer Kupplungseinrichtung der Aufnahmeeinrichtung lösbar aneinander befestigbar sind. Bezüglich der Kupplungseinrichtung wird auf obige Beschreibung der Haltevorrichtung mit zweikomponentiger Aufnahmeeinrichtung verwiesen. Dabei weist das Prüfsystem mehrere erste Komponenten auf, die mittels eines Roboters des Prüfsystems handhabbar und mittels der Kupplungseinrichtung an der zweiten Komponente der Aufnahmeeinrichtung austauschbar montierbar sind. Vorzugsweise weist das Prüfsystem mehrere Prüfdorne, insbesondere mit verschieden spezifizierten Prüfabschnitten, auf, deren Aufnahmeabschnitt in jeweils einem der Aufnahmeräume der mehreren ersten Komponenten aufgenommen ist. Um einen auf eine zu prüfende Bohrung bestimmter Spezifikation abgestimmten Prüfdorn an der Haltevorrichtung zu montieren, kann somit die diesen Prüfdorn tragende Komponente ausgewählt und mittels des Roboters und der Kupplungseinrichtung auf besonders einfache, zuverlässige und schnelle Weise an der zweiten Komponente montiert werden. Es ergibt sich ein besonders einfach, zuverlässig und schnell an verschieden spezifizierte zu prüfende Bohrungen anpassbares Prüfsystem.

Manche Ausführungsbeispiele bilden ein automatisiertes bzw. automatisiert nutzbares Schnellwechselsystem für Prüfdorne oder Messdorne. Die Nutzerkosten sind im Vergleich zu herkömmlichen Systeme u.a. günstiger, weil die Prüfdorne ohne diejenigen Komponenten, die deren Aufnahme an beweglicher Lagerung an einem Gestell dienen, auswechselbar sind. Über eine Anpassungskonstruktion sind die Prüfdorne z.B. mittels eines Hydrodehnspannfutters auswechselbar. Des Weiteren werden funktionssichere Lösungen für die Lagerung der Prüfdorne offenbart, die in vielen mechanischen Freiheitsgraden anpassungsfähig sind. Neben einer schwimmenden Funktion zum Ausgleich von Achsversatz und einer Kippfunktion zum Ausgleich von Schrägstellungen zwischen Prüfdorn und Bohrung sind die Prüfdorne bei einer zu hohen vertikalen Belastung durch eine gefederte Funktion vor Beschädigungen geschützt.

### KURZBESCHREIBUNG DER ZEICHNUNGEN

Weitere Vorteile und Merkmale der Erfindung ergeben sich aus den Ansprüchen sowie aus der nachfolgenden Beschreibung bevorzugter Ausführungsbeispiele der Erfindung, die anhand der Zeichnungen dargestellt sind. Dabei beziehen sich gleiche Bezugszeichen auf gleiche oder ähnliche oder funktional gleiche Bauteile.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.
- Fig. 1: zeigt in schematischer Seitenansicht eine Ausführungsform eines erfindungsgemäßen Prüfsystems mit einer Ausführungsform einer erfindungsgemäßen Haltevorrichtung zum Halten eines Prüfdorns zum Prüfen von Bohrungen,
- Fig. 2: in schematischer Seitenansicht eine weitere Ausführungsform des Prüfsystems mit einer weiteren Ausführungsform der Haltevorrichtung,
- Fig. 3: einen schematischen Längsschnitt des Prüfsystems nach Fig. 2,
- Fig. 4: einen schematischen Längsschnitt des Prüfsystems nach Fig. 1,
- Fig. 5: ein Detail eines schematischen Längsschnitts einer weiteren Ausführungsform der Haltevorrichtung,
- Fig. 6: ein Detail eines schematischen Längsschnitts der Haltevorrichtung nach den Fig. 2 und 3,
- Fig. 7: ein Detail eines schematischen Längsschnitts einer weiteren Ausführungsform der Haltevorrichtung,
- Fig. 8: in teilweise geschnittener schematischer Perspektivdarstellung die Haltevorrichtung nach den Fig. 2, 3 und 6,
- Fig. 9: ein Detail eines schematischen Längsschnitts einer weiteren Ausführungsform der Haltevorrichtung,
- Fig. 10: in einem Längsschnitt eine Komponente der Haltevorrichtung nach den Fig. 2, 3, 6 und 8,
- Fig. 11: die Komponente nach Fig. 10 mit entferntem Prüfdorn,
- Fig. 12: in schematischer Perspektivdarstellung einen einteiligen Grundkörper einer Aufnahmeeinrichtung einer weiteren Ausführungsform der Haltevorrichtung,
- Fig. 13: die Aufnahmeeinrichtung nach Fig. 12 mit entferntem Prüfdorn.

### DETAILLIERTE BESCHREIBUNG DER AUSFÜHRUNGSBEISPIELE

Die Haltevorrichtung 1 der Ausführungsbeispiele ist zum Halten eines Prüfdorns 50 zum Prüfen von Bohrungen ausgebildet. Der Prüfdorn 50 kann in eine zu prüfende Bohrung axial eingeführt werden. Mittels des Prüfdorns kann der Innendurchmesser der Bohrung geprüft werden.

Die Haltevorrichtung wird in einem erfindungsgemäßen Prüfsystem 100 zum Prüfen von Bohrungen verwendet. Im betriebsfertig eingerichteten Zustand umfasst das Prüfsystem 100 zusätzlich zur Haltevorrichtung 1 einen Prüfdorn 50. Der Prüfdorn 50 weist einen Aufnahmeabschnitt 51 auf, der z.B. zylindrisch ausgebildet sein kann. Die Haltevorrichtung 1 weist einen Aufnahmeraum 5 auf. Der Aufnahmeraum 5 ist hier hohlzylindrisch in der Weise ausgebildet, dass der Aufnahmeabschnitt 51 und der Aufnahmeraum 5 komplementär zueinander ausgebildet sind. Im Prüfsystem 100 ist der Aufnahmeabschnitt 51 des Prüfdorns 50 in dem Aufnahmeraum 5 der Aufnahmeeinrichtung 4 der Haltevorrichtung 1 aufgenommen. Beispielsweise ist der Aufnahmeabschnitt 51 passgenau, d.h. in der Art einer engen Spiel- oder Übergangspassung, in dem Aufnahmeraum 5 aufgenommen.

Zum Prüfen einer Bohrung wird ein Prüfabschnitt 53 des Prüfdorns 50, der seinem Aufnahmeabschnitt 51 in axialer Richtung A gegenüberliegt, axial in die zu prüfende Bohrung eingeführt. An dem Prüfdorn 50 ist eine Einführfase ausgebildet. Zur Vermeidung einer Beschädigung des Prüfdorns und/oder der zu prüfenden Bohrung ist eine möglichst koaxiale Ausrichtung des Prüfdorns relativ zur Bohrung wünschenswert. Eine solche koaxiale Ausrichtung lässt sich aber nicht immer zu 100 % sicherstellen, insbesondere wenn ein die zu prüfende Bohrung aufweisender Prüfling mittels eines Roboters oder manuell relativ zum Prüfdorn 50 verstellt wird.

Aus diesem Grund ist die Haltevorrichtung 1 derart ausgebildet, dass der an der Haltevorrichtung 1 montierte Prüfdorn 50 relativ zu einem Gehäuse 2 der Haltevorrichtung 1 axial und radial beweglich und quer zur axialen Richtung A schwenkbeweglich ist, um Ungenauigkeiten beim Einführen des Prüfdorns 50 in die zu prüfende Bohrung in gewissem, d. h. begrenzten, Umfang auszugleichen. Das Gehäuse 2 der Haltevorrichtung 1 ist im Beispiel fest an einem Gestellteil einer Prüfstation oder Messtation befestigt. Das Gehäuse 2 begrenzt bzw. umschließt einen Gehäuseinnenraum 3.

Die axiale Richtung A verläuft in den Beispielsfällen vertikal, das ist aber nicht zwingend. Auch eine horizontale Ausrichtung oder eine schräge Ausrichtung sind möglich.

Die Haltevorrichtung 1 weist eine Aufnahmeeinrichtung 4 auf. Diese dient der Aufnahme des Prüfdorns 50. Die Aufnahmeeinrichtung 4 umfasst dazu den Aufnahmeraum 5, der entlang einer Mittelachse M der Aufnahmeeinrichtung 4 verläuft. Der Aufnahmeraum 5 ist in der axialen Richtung A nach außen geöffnet. Der Aufnahmeabschnitt 51 des Prüfdorns 50 ist entgegen der axialen Richtung A in dem Aufnahmeraum 5 aufnehmbar. Der Aufnahmeabschnitt 51 kann also entgegen der axialen Richtung A in den Aufnahmeraum 5 eingeführt werden, um den Prüfdorn 50 an der Haltevorrichtung 1 zu montieren. Die axiale Richtung A kann entgegen der Schwerkraftrichtung verlaufen.

Die Aufnahmeeinrichtung 4 ist teilweise in dem Gehäuseinnenraum 3 aufgenommen. Dabei ist die Aufnahmeeinrichtung 4 derart an dem Gehäuse 2 gelagert, dass die Aufnahmeeinrichtung 4 relativ zum Gehäuse 2 nachgiebig entlang der axialen Richtung A und schwimmend entlang einer senkrecht zur axialen Richtung A von der Mittelachse M weg verlaufenden radialen Richtung R translatorisch begrenzt beweglich ist. Mit anderen Worten: Die Aufnahmeeinrichtung 4 ist relativ zum Gehäuse 2 axial und radial translatorisch begrenzt beweglich. Zudem ist die Aufnahmeeinrichtung 4 relativ zum Gehäuse 2 um eine quer zur axialen Richtung A verlaufende Schwenkachse derart begrenzt schwenkbeweglich, dass die Mittelachse M der Aufnahmeeinrichtung 4 gegenüber dem Gehäuse 2 anstellbar ist.

In seinem montierten Zustand ist der Prüfdorn 50 teilweise in den Aufnahmeraum 5 eingesteckt bzw. aufgenommen und an der Aufnahmeeinrichtung 4 befestigt. Insofern überträgt sich die vorstehende Nachgiebigkeit der Lagerung der Aufnahmeeinrichtung 4 am Gehäuse 2 auch auf den Prüfdorn 50. Im Falle einer Abweichung der Ausrichtung zwischen zu prüfender Bohrung und Prüfdorn 50 kann somit beim Verstellen des Prüflings relativ zum Prüfdorn 50 der Prüfabschnitt 53 des Prüfdorns 50 mit dem Prüfling in Kontakt kommen, so dass der Prüfdorn mitsamt Aufnahmeeinrichtung 4 durch den Kontakt mit dem Prüfling relativ zum Gehäuse 2 innerhalb der vorstehend beschriebenen Freiheitsgrade verstellt wird. Durch dieses Verstellen infolge des Kontakts mit dem Prüfling kann der Prüfdorn 50 selbsttätig in die zu prüfende Bohrung eingefädelt werden, und anschließend zumindest weitgehend ohne Verkanten, in die Bohrung eintauchen.

Vorliegend weist das Gehäuse 2 einen Gehäusetopf 6 und einen Gehäusedeckel 7 auf. Der nach Art eines Kochtopfes gestaltete Gehäusetopf 6 umfasst einen Topfboden 8 und eine vom Topfboden 8 entlang der axialen Richtung A abstehende, einstückig mit dem Topfboden ausgebildete Topfwand 9. Die Topfwand 9 kann entlang einer Umfangsrichtung U unterbrechungsfrei oder mit Unterbrechungen ausgebildet sein. Insofern kann der Gehäusetopf 6 eine geschlossene Glockengeometrie aufweisen oder beispielsweise klauenförmig ausgebildet sein. Der Gehäusetopf 6 weist eine im Beispielsfall nach unten gerichtete Topföffnung 10 auf, die dem Topfboden 8 entlang der axialen Richtung A gegenüberliegt. Dabei säumt die Topfwand 9 die Topföffnung 10. Mit anderen Worten: Die Topföffnung 10 ist von der Topfwand 9 wenigstens teilweise eingefasst. Der Gehäusedeckel 7 wird durch einen gestellfesten Teil einer Maschine gebildet und deckt die Topföffnung 10 unter Begrenzung des Gehäuseinnenraums 3 ab.

Die Teile sind konstruktiv so aufeinander abgestimmt, dass zwischen dem Gehäuse 2 und der Aufnahmeeinrichtung 4 ein radiales Spiel vorhanden ist. Beispielsweise weist das Gehäuse 2 im Bereich des Topfbodens 8 eine Durchgangsöffnung 11 auf. Mittels der Durchgangsöffnung 11 ist der Gehäuseinnenraum 3 entlang der axialen Richtung A nach außen geöffnet. Vorliegend ist ein Abschnitt der Aufnahmeeinrichtung 4 in der Durchgangsöffnung 11 mit radialem Spiel aufgenommen. Dieser Abschnitt der Aufnahmeeinrichtung 4 ragt also wenigstens teilweise in die Durchgangsöffnung 11, wobei ein radial gemessener Außendurchmesser des Abschnitts kleiner ist als ein radial gemessener Innendurchmesser der Durchgangsöffnung 11. Der Abschnitt der Aufnahmeeinrichtung 4 kann die Durchgangsöffnung 11 vollständig durchragen, so dass der Abschnitt auch teilweise außerhalb des Gehäuseinnenraums 3 angeordnet ist.

Die Haltevorrichtung 1 weist eine erste Axial-Lagereinrichtung 40 auf, mittels welcher die Aufnahmeeinrichtung 4 in axialer Richtung A am Gehäuse 2 gelagert ist. Dabei ist die erste Axial-Lagereinrichtung 40 im Gehäuseinnenraum 3 angeordnet. Die erste Axial-Lagereinrichtung 40 säumt die Durchgangsöffnung 11, die am Topfboden 8 angeordnet ist. Die Durchgangsöffnung 11 kann koaxial zu einer Zentralachse Z des Gehäuses 2 verlaufen. Die Durchgangsöffnung 11 kann also zentral angeordnet sein. Die erste Axial-Lagereinrichtung 40 kann die Durchgangsöffnung 11 entlang der Umfangsrichtung U, insbesondere vollständig, umgeben oder einfassen.

Die Aufnahmeeinrichtung 4 weist einen radial erstreckten Vorsprung 14 auf. Der radial erstreckte Vorsprung kann in der Art einer Schulter entlang der Umfangsrichtung U durchgängig oder mit Unterbrechungen erstreckt sein. Der Vorsprung 14 der Aufnahmeeinrichtung 4 ist innerhalb des Gehäuseinnenraums 3 angeordnet. Entlang der axialen Richtung A ist im Abstand zum Vorsprung 14 ein erstes axiales Ende 13 der Aufnahmeeinrichtung 4 angeordnet. Dabei ist die erste Axial-Lagereinrichtung 40 in axialer Richtung A zwischen dem Gehäuse 2 und dem radial erstreckten Vorsprung 14 angeordnet. Vorliegend ist die erste Axial-Lagereinrichtung 40 entlang der axialen Richtung A zwischen dem nach oben weisenden Gehäuseboden 8 und dem Vorsprung 14 angeordnet. Die Aufnahmeeinrichtung 4 ist somit mittels ihres radial erstreckten Vorsprungs 14 in axialer Richtung A über die erste Axial-Lagereinrichtung 40 an dem Gehäuse 2 abgestützt. Der Außendurchmesser des radial erstreckten Vorsprungs 14 ist größer als der Innendurchmesser der Durchgangsöffnung 11. Somit wird die Beweglichkeit der Aufnahmeeinrichtung 4 relativ zum Gehäuse 2 in axialer Richtung A begrenzt. Der Außendurchmesser des radial erstreckten Vorsprungs 14 ist vorliegend zudem kleiner als ein Innendurchmesser des Gehäuseinnenraums 3. Zwischen dem Vorsprung 14 und der Topfwand 9 ist somit ein radiales Spiel ausgebildet.

Die Haltevorrichtung 1 des Beispiels weist eine radial erstreckte Lagerscheibe 15 auf, die in dem Gehäuseinnenraum 3 aufgenommen ist. Der radial erstreckte Vorsprung 14 der Aufnahmeeinrichtung 4 ist zwischen dem Gehäuse 2 und der Lagerscheibe 15 angeordnet. Vorliegend ist der Vorsprung 14 zwischen dem Topfboden 8 und der Lagerscheibe 15 angeordnet. Der Vorsprung 14 kann entgegen der axialen Richtung A an der Lagerscheibe 15 angelegt sein. Die Lagerscheibe 15 kann entlang der radialen Richtung R erstreckt sein. Eine Dickenrichtung der Lagerscheibe 15 kann der axialen Richtung A entsprechen. Die Lagerscheibe 15 der Aufnahmeeinrichtung 4 trägt vorliegend eine zweite Axial-Lagereinrichtung 41 zur Lagerung der Aufnahmeeinrichtung 4. Die zweite Axial-Lagereinrichtung 41 ist dem radial erstreckten Vorsprung 14 zugewandt an der Lagerscheibe 15 angeordnet. Vorliegend ist der Vorsprung 14 in axialer Richtung A zwischen der zweiten Axial-Lagereinrichtung 41 und der ersten Axial-Lagereinrichtung 40 angeordnet. Die erste Axial-Lagereinrichtung 40 kann integral an dem Gehäuse 2 ausgebildet sein. Die zweite Axial-Lagereinrichtung 41 kann integral an der Lagerscheibe 15 ausgebildet sein.

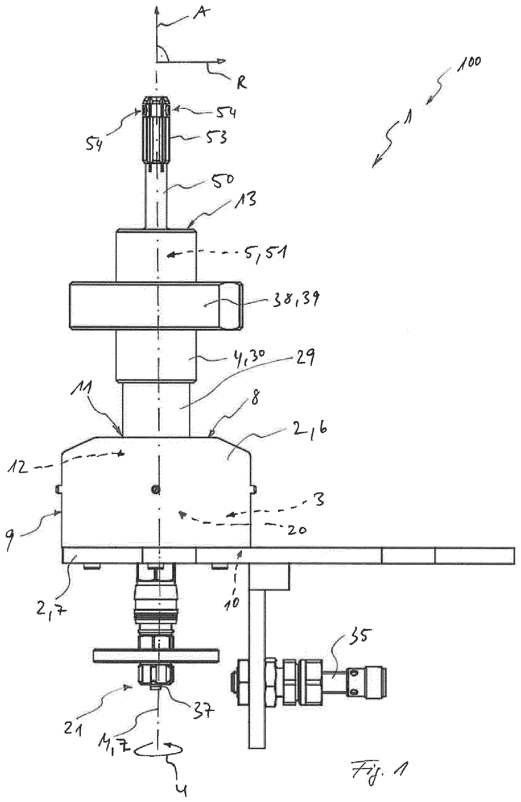

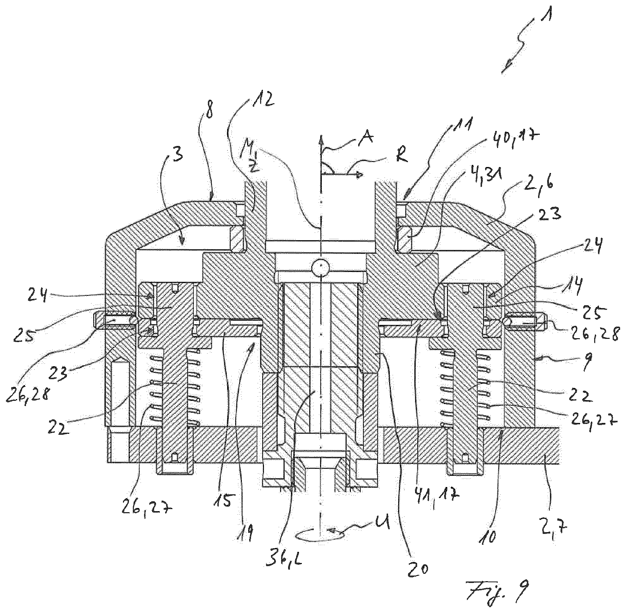

Bei den Ausführungsformen nach den Fig. 1 bis 8 ist die erste Axial-Lagereinrichtung 40 mit einer ringförmigen Kugellagereinheit 18 ausgebildet. Die die erste Axial-Lagereinrichtung 40 ausbildende ringförmige Kugellagereinheit 18 kann einen Kugelkäfig umfassen, der mehrere entlang der Umfangsrichtung U gleichmäßig verteilte Lagerkugeln trägt. Die erste Axiallagereinrichtung 40 kann anstelle der Kugellagereinheit 18 mit einer Wälzlagereinheit, umfassend nichtkugelige Lagerwälzkörper, ausgebildet sein. Im Unterschied hierzu ist bei der Ausführungsform nach Fig. 9 die erste Axial-Lagereinrichtung 40 mit einem ringförmigen Gleitelement 17 ausgebildet. Das ringförmige Gleitelement 17 kann aus einem Material mit besonders guten Gleiteigenschaften hergestellt sein. Beispielsweise kann es sich bei dem Material des Gleitelements 17 um ein Metall wie Messing, Kupfer, Bronze oder um einen Kunststoff wie Polytetrafluorethylen handeln. Bei der Ausführungsform nach Fig. 9 ist auch die zweite Axial-Lagereinrichtung 41 mit einem Gleitelement 17 realisiert, welches vorliegend integral an der Lagerscheibe 15 ausgebildet ist. Beispielsweise kann das Gleitelement 17 in Form einer Beschichtung an der Lagerscheibe 15 angebracht sein oder aus dem Material der Lagerscheibe 15 selbst bestehen. In letzterem Fall kann das Gleitelement 17 durch einen Bereich der Lagerscheibe 15 ausgebildet sein.

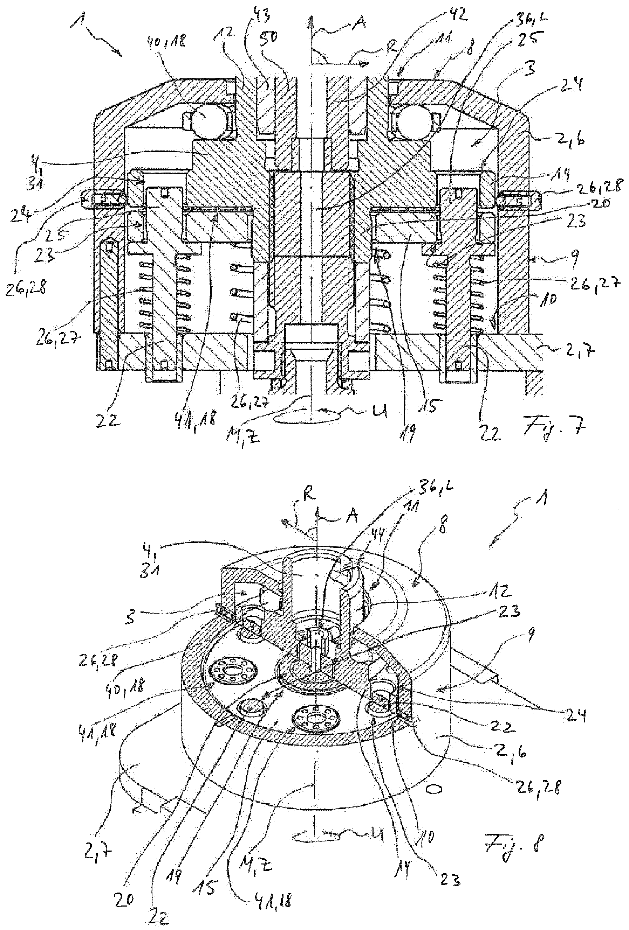

Im Unterschied zur Ausführungsform nach Fig. 9 ist bei den Ausführungsformen nach den Fig. 1 bis 8 die zweite Axial-Lagereinrichtung 41 mit wenigstens einer ringförmigen Kugellagereinheit 18 realisiert. Es können mehrere ringförmige Kugellagereinheiten 18 vorhanden sein, vgl. beispielsweise Fig. 8, die entlang der Umfangsrichtung U im Abstand zueinander an der Lagerscheibe 15 angeordnet sind. Die Lagerscheibe 15 weist hier Vertiefungen auf, in welchen die Kugellagereinheiten 18 teilweise aufgenommen sind. Auch die zweite Axial-Lagereinrichtung 41 kann unter Umständen mit einer Wälzlagereinheit, umfassend nichtkugelige Lagerwälzkörper, ausgebildet sein.

Die Lagerscheibe 15 weist vorliegend einen Durchgang 19 auf, der entlang der axialen Richtung A erstreckt ist. Bei dem Durchgang 19 kann es sich um einen zentralen Durchgang 19 der Lagerscheibe 15 handeln. Die Aufnahmeeinrichtung 4 umfasst einen Abschnitt, der entlang der axialen Richtung A mit radialem Spiel durch den Durchgang 19 hindurch ragt. Dieser Abschnitt ragt vorliegend entgegen der axialen Richtung A durch den Durchgang 19. Die Aufnahmeeinrichtung 4 weist also bei den gezeigten Ausführungsformen entlang der axialen Richtung A beidseits des radialen Vorsprungs 14 jeweils einen Abschnitt auf, von welchen einer in oder durch den Durchgang 19 der Lagerscheibe 15 und der andere in oder durch die Durchgangsöffnung 11 des Gehäuses 2 ragt.

Die Haltevorrichtung 1 des Beispiels in Fig. 1 etc. weist vier Führungsbolzen 22 auf, die parallel zur axialen Richtung A erstreckt sind. Die Führungsbolzen 22 sind entlang der axialen Richtung A beweglich an dem Gehäuse 2 gelagert. Vorliegend ist je Führungsbolzen 22 in dem Gehäusedeckel 7 eine Durchgangsbohrung vorgesehen, in welcher eine gehäusefest montierte Gleitbuchse eingepresst ist. Die Führungsbolzen 22 sind dabei jeweils in einer der Gleitbuchsen relativ zum Gehäusedeckel 7 entlang der axialen Richtung A beweglich geführt. Eine derartige Gleitbuchse kann aus einem Metall wie Messing, Kupfer, Bronze oder einem Kunststoff wie Polytetrafluorethylen hergestellt sein.

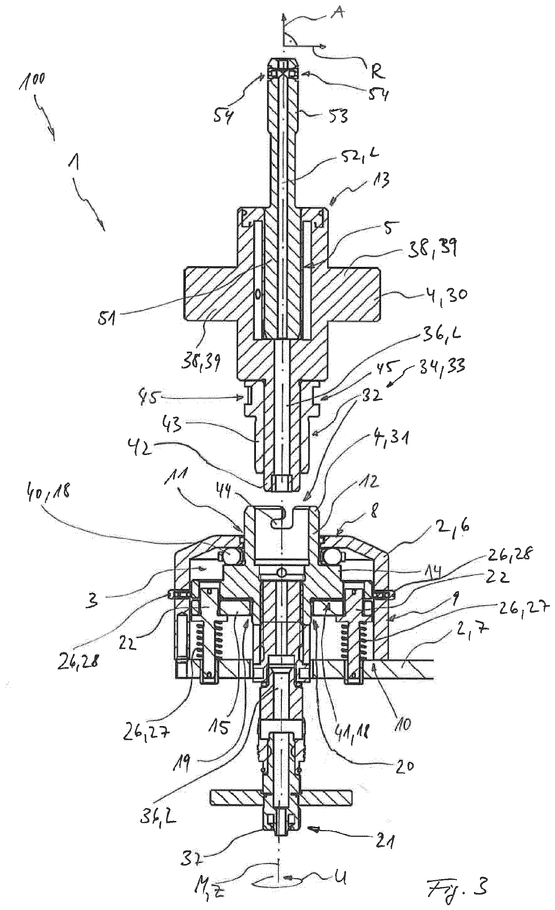

Die Lagerscheibe 15 weist bei den Ausführungsformen mit Führungsbolzen 22 je Führungsbolzen 22 einen entlang der axialen Richtung erstreckten Durchbruch 23 auf, siehe Fig. 3, 4 und 6 bis 8. Die Durchbrüche 23 sind radial zur Zentralachse Z beabstandet angeordnet. In jeden der Durchbrüche 23 greift ein Abschnitt eines der Führungsbolzen 22 mit Spiel ein. Die Führungsbolzen 22 weisen dabei vorliegend eine radiale Verdickung auf, auf welcher die Durchbrüche 23 begrenzende Randbereiche der Lagerscheibe 15 entgegen der axialen Richtung A aufliegen. An dem radial erstreckten Vorsprung 14 der Aufnahmeeinrichtung 4 ist je Führungsbolzen 22 eine entlang der axialen Richtung A erstreckte Ausnehmung 24 vorhanden. Vorliegend sind die Endbereiche 25 der Führungsbolzen 22 mit radialem Spiel teilweise in den Ausnehmungen 24 aufgenommen. Auf diese Weise ist die Aufnahmeeinrichtung 4 mittels der Führungsbolzen 22 am Gehäuse 2 im Wesentlichen drehstarr gehalten. Die Führungsbolzen 22 verhindern somit im Wesentlichen ein Verdrehen der Aufnahmeeinrichtung 4 relativ zum Gehäuse 2 um die Zentralachse Z. "im Wesentlichen" bezieht sich dabei darauf, dass ein begrenztes Verdrehen im Umfang des an den Führungsbolzen 22 vorhandenen Spiels möglich sein kann.

Die Haltevorrichtung 1 weist außerdem eine Rückstelleinrichtung 26 auf. Dabei ist die Aufnahmeeinrichtung 4 mittels der Rückstelleinrichtung 26 relativ zum Gehäuse 2 in eine Neutralstellung selbstrückstellend vorgespannt. In der Neutralstellung verläuft die Mittelachse M der Aufnahmeeinrichtung 4 auf der Zentralachse Z des Gehäuses 2 entlang der axialen Richtung A. In der Neutralstellung ist die Aufnahmeeinrichtung 4 also relativ zum Gehäuse 2 nicht ausgelenkt, d.h. zwischen der Mittelachse M und der Zentralachse Z ist kein radialer Abstand vorhanden und kein Winkelversatz. Zudem kann in der Neutralstellung die erste Axial-Lagereinrichtung 40 entlang der axialen Richtung A an dem radialen Vorsprung 14 der Aufnahmeeinrichtung 4 und an dem Topfboden 8 des Gehäuses 2 angelegt sein. Die Aufnahmeeinrichtung 4 kann also in der Neutralstellung in einer ersten axialen Endposition relativ zum Gehäuse 2 angeordnet sein, aus welcher sie entgegen einer Rückstellwirkung der Rückstelleinrichtung 26 verstellbar ist.

Die Rückstelleinrichtung 26 weist bei manchen Ausführungsformen wenigstens eine erste Federeinrichtung 27 und wenigstens eine zweite Federeinrichtung 28 auf. Dabei ist die erste Federeinrichtung 27 unter Erzeugung einer entlang der axialen Richtung A wirkenden ersten Vorspannkraft entlang der axialen Richtung A elastisch verformbar. Die erste Vorspannkraft verläuft beispielsweise in der axialen Richtung A. Die zweite Federeinrichtung 28 ist unter Erzeugung einer entlang der radialen Richtung wirkenden zweiten Vorspannkraft entlang der radialen Richtung elastisch verformbar. Mittels der zweiten Federeinrichtung 28 kann die Aufnahmeeinrichtung 4 in Bezug auf die Zentralachse Z des Gehäuses 2 zentriert werden. Mittels der ersten Federeinrichtung 27 kann die Aufnahmeeinrichtung 4 in die erste Endposition gezwungen und in der Neutralstellung nachgiebig gehalten werden.

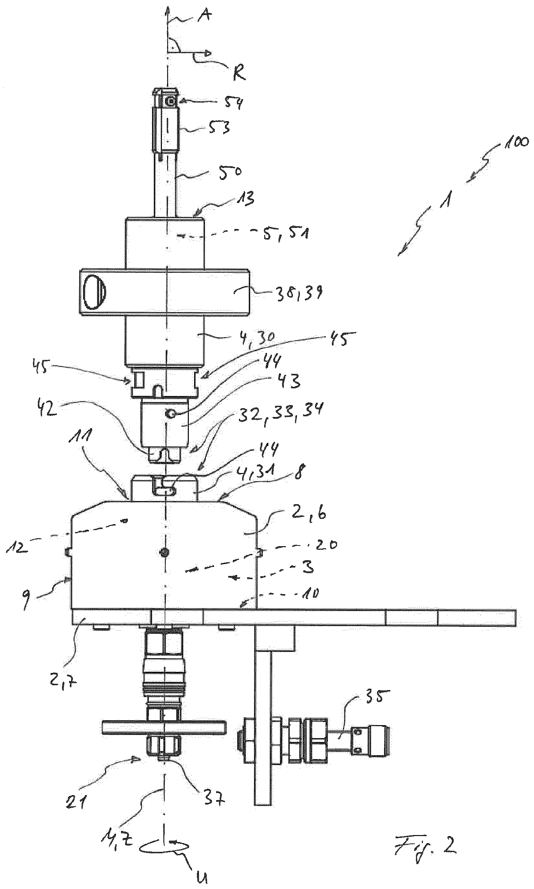

Bei den Ausführungsformen nach den Fig. 2 bis 4 sowie 6 bis 9 ist an jedem der Führungsbolzen 22 eine erste Federeinrichtung 27 vorhanden, und zwar in Form einer den Führungsbolzen einschließenden Schraubendruckfeder.

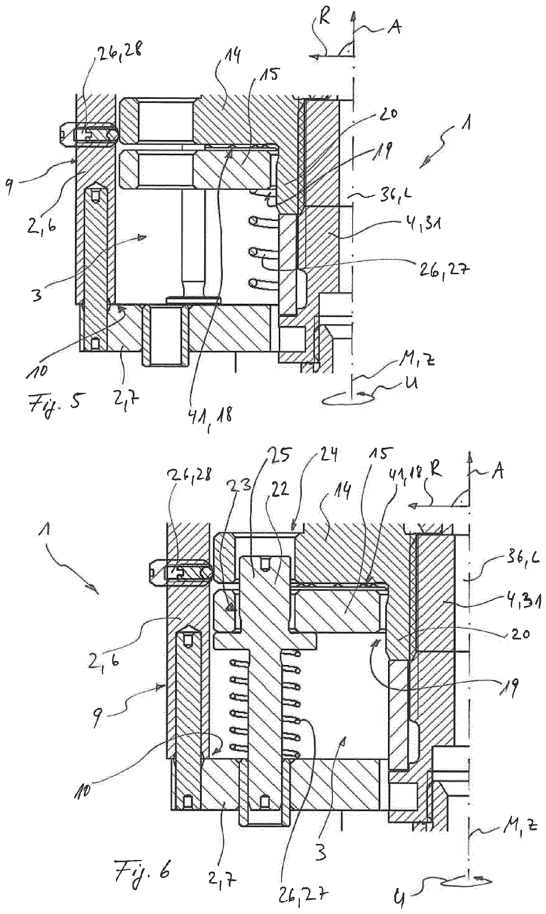

Federeinrichtungen an Führungsbolzen sind aber nicht zwingend. So ist bei der Ausführungsform nach Fig. 5 nur eine zentral angeordnete erste Federeinrichtung 27 vorhanden, die einenends am Gehäusedeckel 7 und anderenends an der Lagerscheibe 15 abgestützt ist. Vorliegend sind zwei Führungsstifte zur axialen Führung der Lagerscheibe 15 und der Aufnahmeeinrichtung 4 relativ zu dem Gehäuse 3 vorgesehen.

Bei der Ausführungsform nach Fig. 7 sind sowohl an den Führungsbolzen 22 erste Federeinrichtungen 27 wie auch zentral eine erste Federeinrichtung 27 vorhanden. Die an den Führungsbolzen 22 angeordneten ersten Federeinrichtungen 27 sind einenends am Gehäusedeckel 7 und anderenends an der Verdickung der Führungsbolzen 22 abgestützt. Die zweiten Federeinrichtungen 28 sind einenends radial an der Topfwand 6 des Gehäuses 2 abgestützt und wirken anderenends je nach axialer Positionierung der Aufnahmeeinrichtung 4 relativ zum Gehäuse 2 auf den radialen Vorsprung 14 oder auf die Lagerscheibe 15.

Bei den gezeigten Ausführungsformen sind vier zweite Federeinrichtungen 28 vorhanden, die entlang der Umfangsrichtung U gleichmäßig (in 90° Winkelteilung) verteilt an der Topfwand 9 angebracht sind. Hierfür sind in der Topfwand 9 Durchgangsbohrungen vorhanden, in welcher eine nach außen geschlossene und zum Gehäuseinnenraum 3 hin geöffnete Hülse eingeschraubt ist, in welcher jeweils eine der zweiten Federeinrichtungen 28 wenigstens teilweise aufgenommen ist. Die Federeinrichtungen 27, 28 sind vorliegend als Schraubenfedern ausgebildet. Es sind aber auch andere Federtypen denkbar - beispielsweise Blatt-, Nadel-, Schenkel-, Evolut-, Spiral-, Teller-, Wellen-, Gas-, Elastomer-Federelemente oder Ähnliches sowie Kombinationen daraus.

Die Aufnahmeeinrichtung 4 weist vorliegend einen ersten Endabschnitt 12 auf, an welchem ein erstes axiales Ende 13 der Aufnahmeeinrichtung 4 vorhanden ist. Zudem weist die Aufnahmeeinrichtung 4 einen zweiten Endabschnitt 20 auf, an welchem ein zweites axiales Ende 21 der Aufnahmeeinrichtung 4 vorhanden ist. Der Aufnahmeraum 5 ist an dem ersten Endabschnitt 12 angeordnet, insbesondere derart, dass er zum ersten axialen Ende 13 hin offen und an der axial gegenüberliegenden Seite geschlossen ist. Der zweite Endabschnitt 20 ist an dem Gehäuse 2 gelagert. Genauer gesagt ist der zweite Endabschnitt 20 wenigstens teilweise innerhalb des Gehäuseinnenraums 3 angeordnet und dort an dem Gehäuse 2 gelagert. Jenen Abschnitt der Aufnahmeeinrichtung 4, der in der Durchgangsöffnung 11 aufgenommen ist, kann im ersten oder im zweiten Endabschnitt liegen. Der zweite Endabschnitt 21 umfasst hier jenen Abschnitt der Aufnahmeeinrichtung 4, der durch den Durchgang 19 der Lagerscheibe 15 ragt. Der radiale Vorsprung 14 der Aufnahmeeinrichtung 4 ist in dem zweiten Endabschnitt 21 angeordnet. Der zweite Endabschnitt 21 der Aufnahmeeinrichtung 4 ragt durch die am Gehäusedeckel 7 vorgesehene Durchgangsöffnung entgegen der axialen Richtung A nach außen. Die am Gehäusedeckel 7 vorhandene Durchgangsöffnung fluchtet mit der am Topfboden vorhandenen Durchgangsöffnung 11 entlang der axialen Richtung A. Auch der Durchgang 19 der Lagerscheibe 15 kann entlang der axialen Richtung A mit der Durchgangsöffnung 11 fluchten.

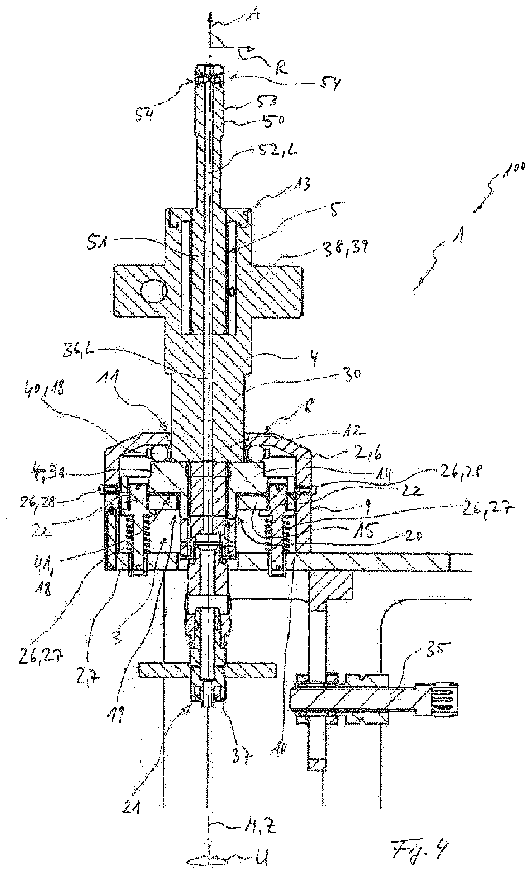

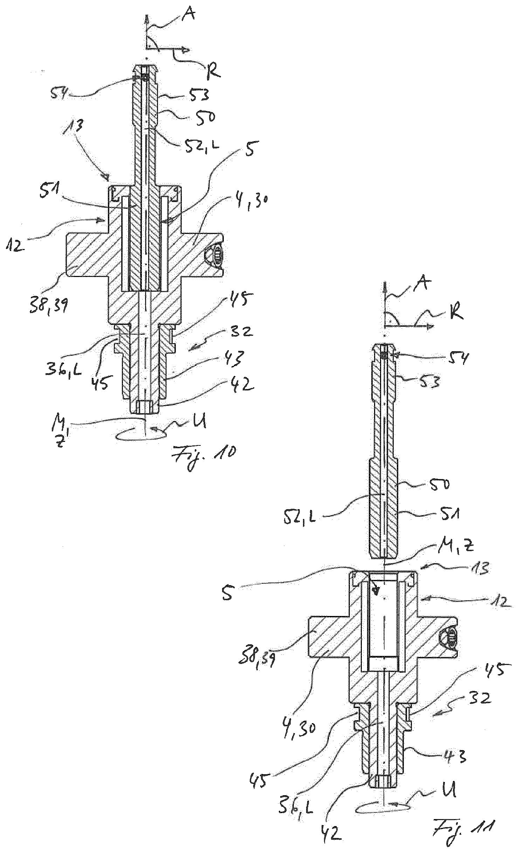

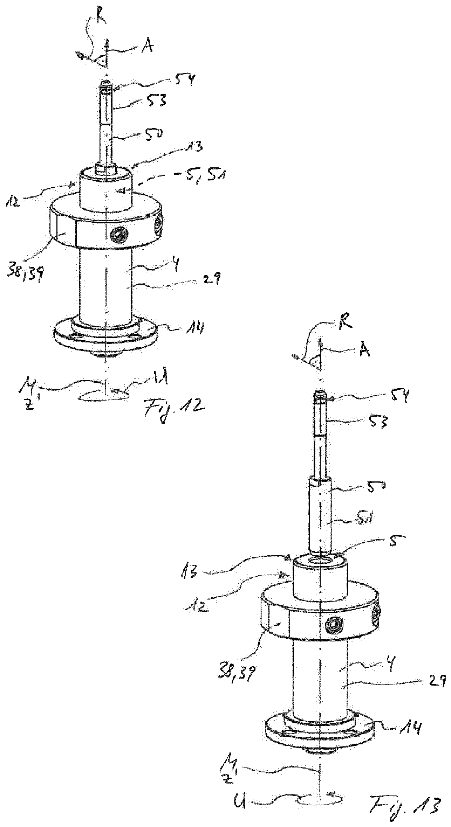

Bei den Ausführungsformen nach den Fig. 12 und 13 weist die Aufnahmeeinrichtung 4 einen einteiligen Grundkörper 29 auf, an welchem das erste und das zweite axiale Ende 12, 21 vorhanden sind. Dieser einteilige Grundkörper 29 umfasst dabei beispielsweise sowohl den Aufnahmeraum 5 als auch den radial erstreckten Vorsprung 14. Demgegenüber weist die Aufnahmeeinrichtung 4 bei den übrigen Ausführungsformen eine erste Komponente 30 mit dem ersten axialen Ende 12 und eine zweite Komponente 31 mit dem zweiten axialen Ende 21 auf. Beide dieser Komponenten 30, 31 weisen jeweils komplementäre Kupplungsabschnitte 32 einer Kupplungseinrichtung 34 der Aufnahmeeinrichtung 4 auf. Dabei sind die erste und die zweite Komponente 30, 31 mittels der Kupplungseinrichtung 34 lösbar aneinander befestigt. In den Darstellungen nach den Fig. 1, 4 und 7 sind die beiden Komponenten 30, 31 in einem aneinander befestigten Zustand gezeigt. Demgegenüber sind die beiden Komponenten 30, 31 gemäß den Fig. 2, 3, 8 sowie 9 voneinander entfernt, d.h. die Kupplungseinrichtung 34 ist jeweils gelöst. Die Kupplungseinrichtung 34 ist bei der Ausführungsform nach den Fig. 1 und 4 als Schraub-Kupplung ausgebildet. Im Unterschied hierzu ist die Kupplungseinrichtung 34 bei den Ausführungsformen nach Fig. 2, 3 sowie 4 bis 11 als Bajonett-Kupplung 33 ausgebildet.

Um alternativ oder zusätzlich zu einer Bohrungsprüfung ggf. eine pneumatische Geometriemessung zu ermöglichen, weist die Aufnahmeeinrichtung 4 vorliegend einen entlang der axialen Richtung A von Druckluft L durchströmbaren Luftkanal 36 auf. Der Luftkanal 36 mündet in den Aufnahmeraum 5. Dem Aufnahmeraum 5 entlang der axialen Richtung A gegenüberliegend endet der Luftkanal 36 in einem Druckluftanschluss 37 der Haltevorrichtung 1. An dem Druckluftanschluss 37 ist eine Druckluftversorgung anschließbar. Dabei kann der Druckluftanschluss 37 an dem zweiten axialen Ende 21 der Aufnahmeeinrichtung 4 und außerhalb des Gehäuseinnenraums 3 angeordnet sein.

Bei den die Bajonett-Kupplung 33 aufweisenden Ausführungsformen weist die erste Komponente 30 an ihrem Kupplungsabschnitt 32 einen entlang der axialen Richtung A erstreckten Zapfen 42 auf. Die erste Komponente 30 umfasst weiterhin eine Verriegelungshülse 43, die den Zapfen 42 entlang der Umfangsrichtung U, umgibt. An der Verriegelungshülse 43 sind radiale Handhabungsbereiche 45 vorgesehen, mittels welcher die Verriegelungshülse 43 manuell oder mittels eines Roboters greifbar ist. Der Kupplungsabschnitt 32 der zweiten Komponente 31 weist eine Bajonett-Kontur 44 auf. Die Verriegelungshülse 43 weist ebenfalls eine Bajonett-Kontur 44 auf, die komplementär zur Bajonett-Kontur 44 des Kupplungsabschnitts 32 der zweiten Komponente 31 ausgebildet ist. Die Verriegelungshülse 43 ist relativ zum Zapfen 42 derart drehbar und axial an dem Zapfen 42 gehalten, dass bei gleichbleibender Ausrichtung der ersten Komponente bzw. des Zapfens 42 relativ zur zweiten Komponente 31 die Bajonett-Konturen 44 miteinander in Eingriff gebracht werden können. Durch das Ineingriffbringen der Bajonett-Konturen 44 kann der Zapfen 42 entlang der axialen Richtung A an der zweiten Komponente 31 gehalten werden. Dabei kann je ein Abschnitt des Luftkanals 36 durch den Zapfen 42 und durch die zweite Komponente 31 hindurchverlaufen. Zum Herstellen und Lösen der Verbindung an der Kupplung müssen die Komponenten nicht relativ zueinander verdreht werden, was die Handhabung, insbesondere ein Handling mittels Roboter, erheblich vereinfachen kann. Insbesondere dadurch, dass der Zapfen 42 und die zweite Komponente 31 relativ zueinander verdrehungsfrei durch Verdrehen der Verriegelungshülse 43 relativ zum Zapfen 42 miteinander verbunden werden können, lassen sich die beiden Abschnitte des Luftkanals 36 mittels der Kupplungseinrichtung 34 leckagefrei miteinander fluidleitend verbinden, ohne den Kontaktbereich der Dichtung durch Relativdrehung zu belasten.

Die Aufnahmeeinrichtung 4 weist im Beispielsfall ein Spannfutter 38 auf, an welchem der Aufnahmeraum 5 ausgebildet ist. Bei dem Spannfutter 38 kann es sich z.B. um ein Backenspannfutter oder - wie vorliegend - um ein Hydrodehnspannfutter 39 handeln. Mittels des Spannfutters 38 kann der Aufnahmeraum 5, insbesondere radial, aufgeweitet oder verengt werden. Mittels des Spannfutters 38 kann ein im Aufnahmeraum 5 aufgenommener Prüfdorn 50 fluiddicht, beispielsweise druckluftdicht, eingespannt werden. Auf diese Weise kann der Prüfdorn 50 über den Luftkanal 36 mit Druckluft L versorgt werden, ohne dass Druckluft zwischen dem Spannfutter 38 und dem Prüfdorn 50 entweichen kann.

Wie eingangs bereits erwähnt, ist die Aufnahmevorrichtung 4 beispielsweise relativ zum Gehäuse 2 entlang der axialen Richtung A innerhalb eines axialen Spiels nachgiebig begrenzt beweglich. Das axiale Spiel kann sich zu 1 mm bis 20 mm, insbesondere 1 mm bis 5 mm, belaufen. Die Aufnahmeeinrichtung 4 ist beispielsweise relativ zum Gehäuse 2 entlang der radialen Richtung R innerhalb eines radialen Spiels schwimmend begrenzt beweglich. Das radiale Spiel kann sich zu 0,05 mm bis 1 mm, insbesondere zu 0,05 mm bis 0,3 mm, belaufen. Die Aufnahmeeinrichtung 4 ist außerdem beispielsweise relativ zum Gehäuse 2 um die eingangs erwähnte Schwenkachse derart schwenkbeweglich, dass die Mittelachse M der Aufnahmeeinrichtung 4 gegenüber der axialen Richtung A unter einem Winkel von 0,5° bis 5°, insbesondere 0,5° bis 3°, anstellbar ist. Insbesondere ist die Aufnahmeeinrichtung 4 relativ zum Gehäuse 2 radial nach allen Seiten hin unter Ausnutzung des radialen Spiels auslenkbar und/oder verschwenkbar. Bewegungsfreiheitsgrade in diesen Größenanordnungen sollten für die meisten praktischen Fälle ausreichend sowie konstruktionstechnisch mit zuverlässiger Funktion realisierbar sein.

Wie z.B. in den Fig. 1 bis 4 dargestellt kann die Haltevorrichtung 1 eine Sensoreinrichtung 35 zur Detektion einer Position der Aufnahmeeinrichtung 4 relativ zum Gehäuse 2 aufweisen. Die beispielhaft dargestellte Sensoreinrichtung 35 ist eine induktive Sensoreinrichtung 38. Die Sensoreinrichtung 35 ist zur berührungslosen Detektion der Position der Aufnahmeeinrichtung 4 relativ zum Gehäuse 2 eingerichtet. Am zweiten axialen Ende 21 der Aufnahmeeinrichtung 4 ist ein Detektionselement angeordnet, auf welches die Sensoreinrichtung 35 bei Annäherung reagiert. Mittels der Sensoreinrichtung 35 erkennt das System automatisch, wenn sich die Aufnahmeeinrichtung 4 relativ zum Gehäuse in einer zweiten Endposition befindet, die der oben bereits beschriebenen ersten Endposition entlang der axialen Richtung A gegenüberliegt. Mittels der Sensoreinrichtung 35 lässt sich somit ein Endschalter realisieren, der betätigt wird, wenn sich die Aufnahmeeinrichtung 4 in ihrer zweiten Endposition befindet. In Abhängigkeit von Sensorsignalen der Sensoreinrichtung 35 kann ein Verstellen eines die zu prüfende Bohrung aufweisenden Prüflings relativ zur Haltevorrichtung 1 kontrolliert werden, insbesondere derart, dass das Verstellen unterbrochen wird, wenn sich die Aufnahmeeinrichtung 4 in ihrer zweiten Endposition befindet. Auf diese Weise lassen sich die Folgen einer Kollision des Prüflings mit der Haltevorrichtung 1 oder einem an der Aufnahmeeinrichtung 4 montierten Prüfdorn 50 abmildern. Insbesondere kann auf diese Weise eine kollisionsbedingte Beschädigung der Haltevorrichtung 1 oder des Prüfdorns 50 oder des Prüflings abgewendet werden, bevor das axiale Spiel zwischen Aufnahmeeinrichtung 4 und Gehäuse 2 vollständig ausgenutzt ist.

Der Prüfdorn 50 des eingangs bereits angesprochenen Prüfsystems 100 weist einen von Druckluft L durchströmbaren Luftkanal 52 auf. Der Luftkanal 52 ist im Aufnahmeabschnitt 51 des Prüfdorns 50 entlang der axialen Richtung A erstreckt. Der Prüfdorn 50 weist - wie oben bereits erwähnt - einen dem Aufnahmeabschnitt 51 in axialer Richtung A gegenüberliegenden Prüfabschnitt 53 auf, der zum axialen Einführen in eine zu prüfende Bohrung eingerichtet ist. Im Prüfabschnitt 53 ist der Luftkanal 52 in wenigstens einer Düsenöffnung 54 des Prüfdorns 50 radial nach außen geöffnet. Es können zwei oder mehr entlang der radialen Richtung R diametral gegenüberliegende Düsenöffnungen 54 vorhanden sein.

In vielen Fällen weist das Prüfsystem 100 mehrere, insbesondere verschieden spezifizierte, Prüfdorne 50 auf. Diese mehreren Prüfdorne 50 können mittels eines Roboters des Prüfsystems 100 handhabbar und an der Aufnahmeeinrichtung 4 der Haltevorrichtung 1 austauschbar montierbar sein.

Beispielsweise weist die Haltevorrichtung 1 des Prüfsystems 100 eine Aufnahmeeinrichtung 4 mit zwei Komponenten 30, 31 auf, wie in den Fig. 1 bis 11 gezeigt und vorstehend erläutert. In diesem Fall kann das Prüfsystem 1 mehrere erste Komponenten 30 aufweisen, die mittels des Roboters des Prüfsystems 100 handhabbar und mittels der Kupplungseinrichtung 34 an der, insbesondere einzigen, zweiten Komponente 31 der Aufnahmeeinrichtung 4 austauschbar montierbar sind. Beispielsweise kann das Prüfsystem 100 dabei mehrere, insbesondere verschieden spezifizierte, Prüfdorne 50 aufweisen, wobei in den Aufnahmeräumen 5 der mehreren ersten Komponenten 30 jeweils der Aufnahmeabschnitt 51 eines der mehreren Prüfdorne 50 aufgenommen ist. Somit können die Prüfdorne 50 mitsamt der ersten Komponente 30, an welcher ein jeweiliger Prüfdorn 50 montiert ist, austauschbar lösbar mit der zweiten Komponente 31 verbunden werden.

## Patentansprüche

1. Haltevorrichtung (1) zum Halten eines Prüfdorns (50) zum Prüfen von Bohrungen, wobei die Haltevorrichtung (1) aufweist:
- ein Gehäuse (2), welches einen Gehäuseinnenraum (3) begrenzt, und
- eine Aufnahmeeinrichtung (4) mit einem entlang einer Mittelachse (M) der Aufnahmeeinrichtung (4) verlaufenden und in einer axialen Richtung (A) der Haltevorrichtung (1) nach außen geöffneten Aufnahmeraum (5), in welchem ein Aufnahmeabschnitt (51) des Prüfdorns (50) entgegen der axialen Richtung (A) aufnehmbar ist,
- wobei die Aufnahmeeinrichtung (4) teilweise in dem Gehäuseinnenraum (3) aufgenommen und derart an dem Gehäuse (2) gelagert ist, dass die Aufnahmeeinrichtung (4) relativ zum Gehäuse (2) nachgiebig entlang der axialen Richtung (A) und schwimmend entlang einer senkrecht zur axialen Richtung (A) von der Mittelachse (M) weg verlaufenden radialen Richtung (R) translatorisch begrenzt beweglich ist,
- wobei die Aufnahmeeinrichtung (4) relativ zum Gehäuse (2) um eine quer zur axialen Richtung (A) verlaufende Schwenkachse derart begrenzt schwenkbeweglich ist, dass die Mittelachse (M) der Aufnahmeeinrichtung (4) gegenüber dem Gehäuse (2) anstellbar ist.

2. Haltevorrichtung (1) nach Anspruch 1, **dadurch gekennzeichnet, dass**
- das Gehäuse (2) einen Gehäusetopf (6) und einen Gehäusedeckel (7) aufweist,
- wobei der Gehäusetopf (6) einen Topfboden (8) und eine vom Topfboden (8) entlang der axialen Richtung (A) abstehende Topfwand (9) aufweist,
- wobei die Topfwand (9) dem Topfboden (8) entlang der axialen Richtung (A) gegenüberliegend eine Topföffnung (10) des Gehäusetopfs (6) säumt, die zur Begrenzung des Gehäuseinnenraums (3) mittels des Gehäusedeckels (7) abgedeckt ist,
- wobei zwischen dem Gehäuse (2) und Aufnahmeeinrichtung (4) ein radiales Spiel vorhanden ist,
- wobei vorzugsweise das Gehäuse (2) im Bereich des Topfbodens (8) eine Durchgangsöffnung (11) aufweist, mittels welcher der Gehäuseinnenraum (3) entlang der axialen Richtung (A) nach außen geöffnet ist,
- wobei ein Abschnitt der Aufnahmeeinrichtung (4) in der Durchgangsöffnung (11) mit radialem Spiel aufgenommen ist.

3. Haltevorrichtung (1) nach Anspruch 1 oder 2, **dadurch gekennzeichnet, dass**
- die Haltevorrichtung (1) eine erste Axial-Lagereinrichtung (40) zur Lagerung der Aufnahmeeinrichtung (4) aufweist, wobei die erste Axial-Lagereinrichtung (40) im Gehäuseinnenraum (3) angeordnet ist und dort die Durchgangsöffnung (11) säumt,
- wobei die Aufnahmeeinrichtung (4) innerhalb des Gehäuseinnenraums (3) und in axialem Abstand zu einem ersten) axialen Ende (13) einen radial erstreckten Vorsprung (14) aufweist,
- wobei die erste Axial-Lagereinrichtung (40) in axialer Richtung (A) zwischen dem Gehäuse (2) und dem radial erstreckten Vorsprung (14) angeordnet ist,
- insbesondere wobei ein Außendurchmesser des radial erstreckten Vorsprungs (14) größer ist als ein Innendurchmesser der Durchgangsöffnung (11) und kleiner als ein Innendurchmesser des Gehäuseinnenraums (3).

4. Haltevorrichtung (1) nach einem der vorhergehenden Ansprüche, **dadurch gekennzeichnet, dass**
- die Haltevorrichtung (1) eine radial erstreckte Lagerscheibe (15) aufweist, die in dem Gehäuseinnenraum (3) aufgenommen ist,
- wobei die Aufnahmeeinrichtung (4) innerhalb des Gehäuseinnenraums (3) einen radial erstreckten Vorsprung (14) aufweist, der entlang der axialen Richtung (A) zwischen dem Gehäuse (2), insbesondere dem Topfboden (8), und der Lagerscheibe (15) angeordnet ist,
- wobei vorzugsweise die Lagerscheibe (15) dem radial erstreckten Vorsprung (14) zugewandt eine zweite Axial-Lagereinrichtung (41) zur Lagerung der Aufnahmeeinrichtung (4) trägt,
- insbesondere wobei die Lagerscheibe (15) einen, insbesondere zentralen, Durchgang (19) aufweist, wobei die Aufnahmeeinrichtung (4) einen Abschnitt umfasst, der entlang der axialen Richtung (A) mit radialem Spiel durch den Durchgang (19) ragt, insbesondere wobei die erste und/oder zweite Axial-Lagereinrichtung (40, 41) wenigstens ein Gleitelement (17) und/oder wenigstens eine ringförmige Kugellagereinheit (18) aufweist.

5. Haltevorrichtung (1) nach Anspruch 4, **dadurch gekennzeichnet, dass**
- die Haltevorrichtung (1) wenigstens zwei am Gehäuse (2) entlang der axialen Richtung (A) beweglich gelagerte Führungsbolzen (22) aufweist, die parallel zur axialen Richtung (A) erstreckt sind, und
- die Lagerscheibe (15) je Führungsbolzen (22) einen entlang der axialen Richtung (A) erstreckten Durchbruch (23) aufweist,
- wobei in jeden der Durchbrüche (23) ein Abschnitt eines der Führungsbolzen (22) mit Spiel eingreift,
- insbesondere wobei an dem radial erstreckten Vorsprung (14) der Aufnahmeeinrichtung (4) je Führungsbolzen (22) eine entlang der axialen Richtung (A) erstreckte Ausnehmung (24) der Aufnahmeeinrichtung (4) vorhanden und axiale Endbereiche (25) der Führungsbolzen (22), insbesondere mit radialem Spiel, wenigstens teilweise in den Ausnehmungen (24) aufgenommen sind.

6. Haltevorrichtung (1) nach einem der vorhergehenden Ansprüche, **dadurch gekennzeichnet, dass**
- die Haltevorrichtung (1) eine Rückstelleinrichtung (26) aufweist,
- wobei die Aufnahmeeinrichtung (4) mittels der Rückstelleinrichtung (26) relativ zum Gehäuse (2) in eine Neutralstellung selbstrückstellend vorgespannt ist, wobei in der Neutralstellung die Mittelachse (M) der Aufnahmeeinrichtung (4) auf einer Zentralachse (Z) des Gehäuses (2) entlang der axialen Richtung (A) verläuft,
- insbesondere wobei die Rückstelleinrichtung (26) wenigstens eine erste und wenigstens eine zweite Federeinrichtung (27, 28) aufweist, wobei die erste Federeinrichtung (27) unter Erzeugung einer entlang, insbesondere in, der axialen Richtung (A) wirkenden ersten Vorspannkraft entlang der axialen Richtung (A) elastisch verformbar ist, wobei die zweite Federeinrichtung (28) unter Erzeugung einer entlang, insbesondere entgegen, der radialen Richtung (R) wirkenden zweiten Vorspannkraft entlang der radialen Richtung (R) elastisch verformbar ist.

7. Haltevorrichtung (1) nach einem der vorhergehenden Ansprüche, **dadurch gekennzeichnet, dass**
- die Aufnahmeeinrichtung (4) einen ersten Endabschnitt (12) mit einem ersten axialen Ende (13) der Aufnahmeeinrichtung (4) und einen zweiten Endabschnitt (20) mit einem zweiten axialen Ende (21) der Aufnahmeeinrichtung (4) aufweist,
- wobei an dem ersten Endabschnitt (12), insbesondere an dem ersten axialen Ende (13), der Aufnahmeraum (5) angeordnet ist,
- wobei der zweite Endabschnitt (20), insbesondere innerhalb des Gehäuseinnenraums (3), an dem Gehäuse (2) gelagert ist.

8. Haltevorrichtung (1) nach Anspruch 7, **dadurch gekennzeichnet, dass**
- die Aufnahmeeinrichtung (4) eine erste Komponente (30) mit dem ersten axialen Ende (12) und eine zweite Komponente (31) mit dem zweiten axialen Ende (21) aufweist, wobei die beiden Komponenten (30, 31) jeweils komplementäre Kupplungsabschnitte (32) einer, insbesondere als Bajonett-Kupplung (33) oder Schraub-Kupplung ausgebildeten, Kupplungseinrichtung (34) der Aufnahmeeinrichtung (4) aufweisen, wobei die erste und die zweite Komponente (30, 31) mittels der Kupplungseinrichtung (34) lösbar aneinander befestigt sind, oder
- dass die Aufnahmeeinrichtung (4) einen einteiligen Grundkörper (29) aufweist, an welchem das erste und das zweite axiale Ende (12, 21) vorhanden sind.

9. Haltevorrichtung (1) nach einem der vorhergehenden Ansprüche, **dadurch gekennzeichnet, dass**
- die Aufnahmeeinrichtung (4) einen entlang der axialen Richtung (A) von Druckluft (L) durchströmbaren Luftkanal (36) aufweist, welcher in den Aufnahmeraum (5) mündet,
- wobei der Luftkanal (36) dem Aufnahmeraum (5), insbesondere entlang der axialen Richtung (A), gegenüberliegend in einem Druckluftanschluss (37) der Haltevorrichtung (1) endet, wobei an dem Druckluftanschluss (37) eine Druckluftversorgung anschließbar ist, insbesondere wobei der Druckluftanschluss (37) an einem (zweiten) axialen Ende (21) der Aufnahmeeinrichtung (4) und außerhalb des Gehäuseinnenraums (3) angeordnet ist.
- insbesondere wobei, bei Rückbezug auf Anspruch 8, die erste Komponente (30) an ihrem Kupplungsabschnitt (32) einen entlang der axialen Richtung (A) erstreckten Zapfen (42) und eine den Zapfen (42) umgebende Verriegelungshülse (43), insbesondere mit Handhabungsbereichen (45), aufweist, wobei die Verriegelungshülse (43) und der Kupplungsabschnitt (32) der zweiten Komponente (31) komplementäre Bajonett-Konturen (44) aufweisen, wobei die Verriegelungshülse (43) relativ zum Zapfen (42) derart drehbar und axial an dem Zapfen (42) gehalten ist, dass bei gleichbleibender Ausrichtung des Zapfens (42) relativ zur zweiten Komponente (31) die Bajonett-Konturen (44) miteinander in Eingriff bringbar sind, um den Zapfen (42) mittels der Bajonett-Konturen (44) entlang der axialen Richtung (A) an der zweiten Komponente (31) zu halten, insbesondere wobei je ein Abschnitt des Luftkanals (36) durch den Zapfen (42) und durch die zweite Komponente (31) hindurch verläuft, wobei die beiden Abschnitte des Luftkanals (36) mittels der Kupplungseinrichtung (34) leckagefrei miteinander fluidleitend verbindbar sind.

10. Haltevorrichtung (1) nach einem der vorhergehenden Ansprüche, **dadurch gekennzeichnet, dass**
- die Aufnahmeeinrichtung (4) ein Spannfutter (38), insbesondere ein Hydrodehnspannfutter (39), aufweist, an welchem der Aufnahmeraum (5) vorhanden ist, insbesondere wobei mittels des Spannfutters (38) ein im Aufnahmeraum (5) aufgenommener Prüfdorn (50) fluiddicht, insbesondere druckluftdicht, einspannbar ist,
und/oder dass
- die Aufnahmevorrichtung (4) relativ zum Gehäuse (2) entlang der axialen Richtung (A) innerhalb eines axialen Spiels von 1 Millimeter bis 20 Millimeter nachgiebig begrenzt beweglich ist, und/oder dass
- die Aufnahmeeinrichtung (4) relativ zum Gehäuse (2) entlang der radialen Richtung (R) innerhalb eines radialen Spiels von 0,05 Millimeter bis 1 Millimeter schwimmend begrenzt beweglich ist, und/oder dass
- die Aufnahmeeinrichtung (4) relativ zum Gehäuse (2) um die Schwenkachse derart schwenkbeweglich ist, dass die Mittelachse (M) der Aufnahmeeinrichtung (4) gegenüber der axialen Richtung (A) unter einem Winkel von 0,5 Grad bis 5 Grad anstellbar ist.

11. Haltevorrichtung (1) nach einem der vorhergehenden Ansprüche, **dadurch gekennzeichnet, dass**
die Haltevorrichtung (1) eine, insbesondere induktive, Sensoreinrichtung (35) zur Detektion einer Position der Aufnahmeeinrichtung (4) relativ zum Gehäuse (2) aufweist.

12. Prüfsystem (100) zum Prüfen von Bohrungen, wobei das Prüfsystem (100) aufweist:
- eine Haltevorrichtung (1) nach einem der vorhergehenden Ansprüche,
- einen Prüfdorn (50) mit einem Aufnahmeabschnitt (51),
- wobei der Aufnahmeabschnitt (51) des Prüfdorns (50) in dem Aufnahmeraum (5) der Aufnahmeeinrichtung (4) der Haltevorrichtung (1) aufgenommen ist.

13. Prüfsystem (100) nach Anspruch 12, **dadurch gekennzeichnet, dass**
- der Prüfdorn (50) einen von Druckluft (L) durchströmbaren Luftkanal (52) aufweist, der im Aufnahmeabschnitt (51) entlang der axialen Richtung (A) erstreckt ist,
- wobei der Prüfdorn (50) einen dem Aufnahmeabschnitt (51) in axialer Richtung (A) gegenüberliegenden Prüfabschnitt (53) aufweist, wobei der Prüfabschnitt (53) zum axialen Einführen in eine zu prüfende Bohrung eingerichtet ist,
- wobei der Luftkanal (52) des Prüfdorns (50) im Prüfabschnitt (53) in wenigstens einer Düsenöffnung (54) des Prüfdorns (50) radial nach außen geöffnet ist.

14. Prüfsystem (100) nach Anspruch 12 oder 13, **dadurch gekennzeichnet, dass** das Prüfsystem (100) mehrere Prüfdorne (50) aufweist, die mittels eines Roboters des Prüfsystems (100) handhabbar und an der Aufnahmeeinrichtung (4) austauschbar montierbar sind.

15. Prüfsystem (100) nach einem der Ansprüche 12 bis 14, **dadurch gekennzeichnet, dass**
- die Aufnahmeeinrichtung (4) der Haltevorrichtung (1) eine erste Komponente (30) mit einem ersten axialen Ende (12) der Aufnahmeeinrichtung (4) und eine zweite Komponente (31) mit einem zweiten axialen Ende (21) der Aufnahmeeinrichtung (4) aufweist, wobei der Aufnahmeraum (5) an dem ersten axialen Ende (21) angeordnet ist,
- wobei die beiden Komponenten (30, 31) jeweils komplementäre Kupplungsabschnitte (32) einer, insbesondere als Schraub-Kupplung oder Bajonett-Kupplung (33) ausgebildeten, Kupplungseinrichtung (34) der Aufnahmeeinrichtung (4) aufweisen, wobei der erste und der zweite Endkörper (30, 31) mittels der Kupplungseinrichtung (34) lösbar aneinander befestigbar sind,
- wobei das Prüfsystem (100) mehrere erste Komponenten (31) aufweist, die mittels eines Roboters des Prüfsystems (100) handhabbar und mittels der Kupplungseinrichtung (34) an der zweiten Komponente (30) der Aufnahmeeinrichtung (4) austauschbar montierbar sind,
- insbesondere wobei das Prüfsystem (100) mehrere Prüfdorne (50) aufweist und in den Aufnahmeräumen (5) der mehreren ersten Komponenten (31) jeweils der Aufnahmeabschnitt (51) eines der mehreren Prüfdorne (50) aufgenommen ist.
